# EUROPÄISCHE PATENTSCHRIFT

(11) **EP 0 861 584 B1**
(45) Veröffentlichungstag und Bekanntmachung des Hinweises auf die Patenterteilung: **17.09.2003**
(21) Anmeldenummer: 98103258.4
(22) Anmeldetag: 25.02.1998
(51) Int. Cl.: A01D 90/04

(54) **Schneidwerk für landwirtschaftliche Maschine**
Cutting device for agricultural machines
Dispositif de coupe pour machines agricoles

(30) Priorität: 26.02.1997 DE 19707662
(43) Veröffentlichungstag der Anmeldung: 02.09.1998
(73) Patentinhaber: CLAAS Saulgau GmbH, 88340 Bad Saulgau (DE)
(72) Erfinder: Geng, Manfred, 88340 Saulgau-Bogenweiler (DE)

(56) Entgegenhaltungen:
- EP-A- 0 564 922
- DE-A- 4 302 199
- DE-U- 29 516 835

## Beschreibung

Die Erfindung betrifft ein Schneidwerk für landwirtschaftliche Maschinen, das an einem Förderkanal für Halmgut vorgesehen, das die Gattungsmerkmale des Oberbegriffs des Patentanspruchs 1 aufweist. Solche Schneidwerke sind insbesondere an fahrbaren Ballenpressen und an Ladewagen vorgesehen, bei denen Halmgut mittels einer 'pick up' vom Boden aufgenommen wird und anschließend zerkleinert werden soll.

Ein Schneidwerk dieser Gattung ist aus der deutschen Offenlegungsschrift DE-A-43 02 199 bekannt. Die Besonderheit dieses Schneidwerks besteht darin, daß die Messerhebel, welche unter der Wirkung einzelner ihnen zugeordneter Federelemente an den Messern anliegen, zum Ausbau der Messer gemeinsam ausgeschwenkt werden können, ohne diese Federelemente zu spannen, d. h. mit relativ geringer Kraft. Dazu sind die Messerhebel über Stangen mit einer bewegbaren gemeinsamen Quertraverse verbunden. Die Stangen, die in diesem Fall von je einer Druckfeder umgeben sind, durchsetzen die Quertraverse und haben an ihren Enden Anschläge. Somit kann ein Messer durch Fremdeinwirkung, z. B. wenn ein Stein in den Förderkanal gelangt, unter Spannen des betreffenden Federelements, kurzzeitig aus dem Förderkanal ausschwenken. Die einzelnen Stangen sind insoweit frei beweglich. Wird andererseits die Quertraverse mit Hilfe von an ihr angreifenden Hubzylindern bewegt, so werden die Stangen aufgrund ihrer Anschläge mitgenommen und heben die Messerhebel von den Messern ab, wobei die Federlänge sich im wesentlichen nicht verändert.

Der Erfindung liegt die Aufgabe zugrunde, ein Schneidwerk der genannten Gattung zu vereinfachen und den Ausbau der Messer nachhaltig zu erleichtern, wobei davon ausgegangen wird, daß das Schneidwerk insgesamt zu Zwecken der Revision und des Messerwechsels nach unten schwenkbar angebracht ist und zum Antrieb dieser Schwenkbewegung Hubzylinder vorgesehen sind.

Die gestellte Aufgabe wird bei einem Schneidwerk der einleitend bezeichneten Gattung erfindungsgemäß durch die kennzeichnenden Merkmale des Patentanspruchs 1 gelöst. Der Lösungsgrundgedanke ist, die zum Schwenken des Schneidwerks ohnehin vorhandenen Hubzylinder auch zum Öffnen der Messerhebel heranzuziehen, so daß die Messer dann ausgebaut werden können. Dabei laufen vorteilhafterweise die Vorgänge des Herunterschwenkens des Schneidwerks und des Ausschwenkens der Messerhebel ohne weiteres Zutun nacheinander ab. Während bei dem erwähnten bekannten Schneidwerk die Quertraversen mittels einer Hebelanordnung beweglich gelagert sind und die Kräfte der Hubzylinder durch mehrfache Hebelumlenkung zur Anwendung gebracht werden, ist nach der Erfindung die Quertraverse in den Seitenwänden des Schneidwerkrahmens in Schlitzführungen verschiebbar aufgenommen und die Hubzylinder greifen unmittelbar an den Quertraversen an. Darin liegt eine beträchtliche Vereinfachung.

Nach einem bevorzugten Ausführungsbeispiel sind die Hubzylinder doppeltwirkend ausgelegt, so daß die Möglichkeit besteht, zunächst das Schneidwerk ausgehend von der Betriebsstellung bis zum Anschlag nach unten zu schwenken und sodann mit dem Rest der Hublänge die Quertraverse in den Schlitzführungen zu bewegen und dadurch die Messerhebel auszuschwenken. Bei der Gegenbewegung bewegt sich zuerst die Quertraverse, so daß die Messerhebel mittels ihrer schwach gespannten Federn wieder in die Betriebsstellung zurückschwenken und mit dem längeren restlichen Hubweg das Schneidwerk nach oben eingeschwenkt wird.

Alternativ könnten zum Ausschwenken der Messerhebel getrennte Hubzylinder oder insbesondere starke Federelemente vorgesehen sein, welche an der Quertraverse angreifen und diese in den Schlitzführungen unter Mitnahme der an den Messerhebeln angreifenden Stangen in die Stellung drängen, in welcher die Messerhebel ausgeschwenkt sind. Die Hubzylinder für die Schwenkbewegung des Messerwerks können dann einfachwirkend sein. In beiden Fällen ist es wesentlich, das Messerwerk in der ausgeschwenkten unteren Stellung durch Anschläge aufzufangen. Eine besonders vorteilhafte Anschlaganordnung besteht darin, daß je zwei gelenkig oder durch eine Schlitzführung und ein Gelenk miteinander verbundene Gelenklaschen vorgesehen sind, die in ihrer gestreckten Stellung den Anschlag bilden.

Vorteilhaft ist es ferner, wenn das Schneidwerk in einem . schwenkbaren Rahmen enthalten ist, der auch den Teil des Förderkanalbodens enthält, den die Messer durchsetzen. Die Messer werden also nach dieser Konstruktion beim Aufschwenken des Schneidwerks nicht durch den Förderkanalboden hindurch aus dem Förderkanal herausgezogen, sondern der Bodenabschnitt geht beim Schwenken des Schneidwerks mit. Zum Ausbau werden die Messer nach oben durch die Schlitze im Förderkanalboden herausgezogen.

Bei dem erwähnten bekannten Schneidwerk ist es schon bekannt, die Messer für ihre Ausweichbewegung bei Fremdkörpereinwirkung um Zapfen drehbar zu lagern, die an einer Exzenterwelle sitzen. Die Messer haben winkelförmige Schlitze und die Zapfen halten die Messer in ihrer Einbaustellung zwar schwenkbar, aber verriegelt. Zum Ausbau wird die Exzenterwelle um 180° gedreht, wodurch die Messer von den Zapfen freikommen. Um bei dieser Anordnung das Hochziehen der Messer durch die Förderkanal-Bodenschlitze zu erleichtern, wird vorgeschlagen, daß ein sich parallel zur Exzenterwelle erstreckendes schwenkbares gemeinsames Aushebeorgan vorgesehen ist, welches die entriegelten Messer durch Anlage an deren Unterkante anzuheben gestattet.

Ein Ausführungsbeispiel der Erfindung wird nachfolgend anhand der Zeichnung erläutert.

Im einzelnen zeigt
- Fig. 1: die Seitenansicht eines Schneidwerks in der Betriebsstellung,
- Fig. 2: dieses Schneidwerk in der nach unten geschwenkten Offenstellung, wobei die Messerhebel noch unbeeinflußt sind,
- Fig. 3: das Schneidwerk in der Stellung nach Fig. 2, aber mit ausgeschwenkten Messerhebeln,
- Fig. 4: eine Seitenansicht der Schlitzführung der Quertraverse in größerem Maßstab,
- Fig. 5: eine Schnittdarstellung V-V der Schlitzführung nach Fig. 4 und
- Fig. 6: eine weitere Seitenansicht des Schneidwerks mit verschiedenen Phasen des Messerausbaues und einem zusätzlichen Aushebeorgan.

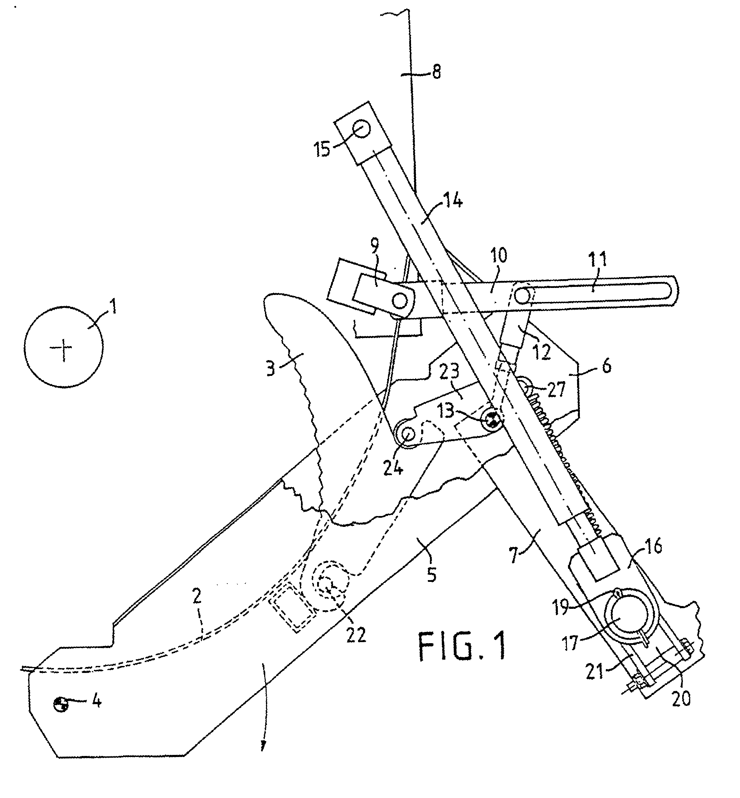

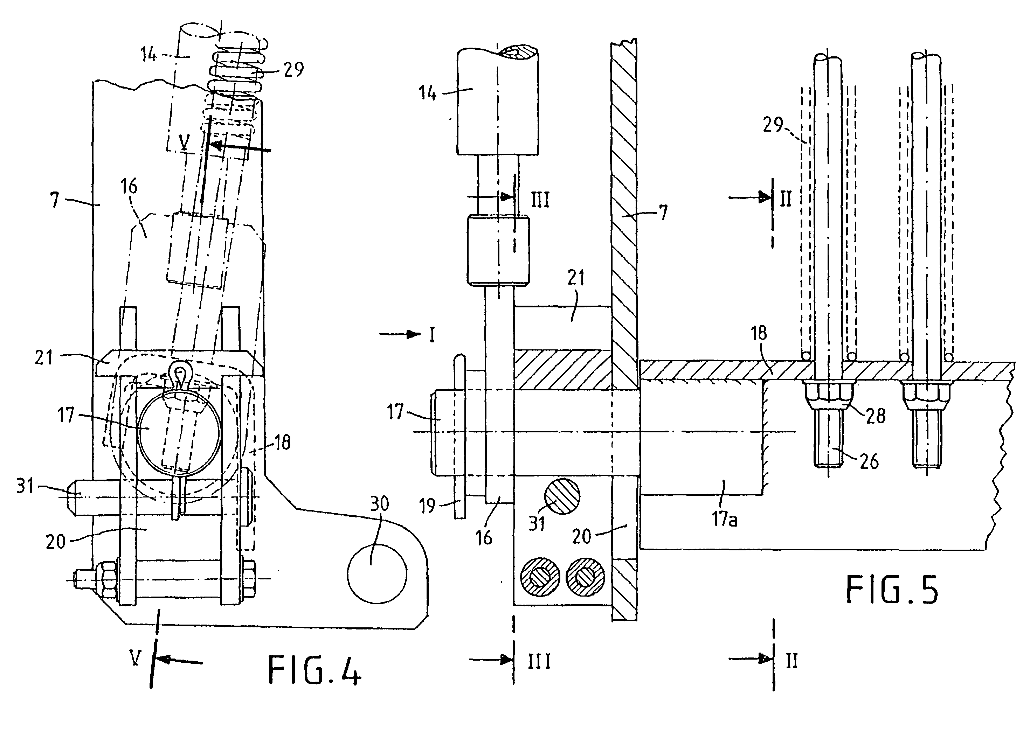

Um die Einzelheiten der Schlitzführung und der Quertraverse leichter verständlich zu machen, zeigen die Fig. 1 - 3 der Reihe nach die Ansicht I, einen Schnitt II-II und einen Schnitt III-III gemäß Fig. 5.

Zunächst werden die wesentlichen Teile des Schneidwerks anhand der Fig. 1 beschrieben. Um eine Rotorwelle 1 dreht sich ein nicht dargestellter Förderrotor mit Zinken, die nahe an einen Förderkanalboden 2 heranreichen und zwischen den in den Förderkanal hineinstehenden Messern 3 durchlaufen bzw. mit diesen zusammenwirken. Das Schneidwerk ist in einen Rahmen eingebaut, der um horizontale Drehzapfen 4 nach unten schwenkbar gelagert ist und zwei Seitenwände 5, 6 aufweist. Im Bereich des Schneidwerks ist der tonnenförmig gewölbte Förderkanalboden 2 an dem Rahmen befestigt und schwenkt mit diesem auf. Zum Durchtritt der Messer 3 sind in dem Förderkanalboden 2 entsprechend bemessene, sich in Umfangsrichtung erstreckende Schlitze vorgesehen. An beiden Seitenwänden 5, 6 sind rechtwinklig abstehende L-förmige Ansätze 7 befestigt.

Am Gehäuse 8 der betreffenden landwirtschaftlichen Maschine, z. B. Ladewagen, sind zu beiden Seiten zweiteilige Gelenkstreben angebracht, welche als Anschläge wirken und das Schneidwerk in seiner unteren Stellung abfangen. Sie bestehen je aus einem am Maschinengehäuse 8 befestigten Auge 9, einer ersten Gelenklasche 10 mit Längsschlitz 11 und einer zweiten längenverstellbaren Gelenklasche 12. Das eine Ende dieser zuletzt genannten Lasche greift mit einem Drehzapfen in den Schlitz 11 ein. Das andere Ende ist an einem Zapfen 13 drehbar gelagert, der fest an der Seitenwand 5 sitzt. Ferner sind zu beiden Seiten des Gehäuses 8 Hubzylinder 14 um Drehzapfen 15 angelenkt. An ihren Kolbenstangenenden sind Augen 16 angebracht, die auf die Verlängerungszapfen 17 einer Quertraverse 18 aufgesteckt und mit Splinten 19 gesichert sind.

Die Quertraverse 18 hat einen ungleichschenklig U-förmigen Querschnitt. An den Enden sind in die U-Form die Verlängerungszapfen 17 eingelegt und eingeschweißt (Fig. 5). Zu diesem Zweck haben die Verlängerungszapfen einen mit der Quertraverse bündig abschließenden Abschnitt 17 a größeren Durchmessers, der teilweise abgeflacht ist. Der überstehende vollzylindrische Abschnitt hat einen kleineren Durchmesser.

Die Ansätze 7, die als Flacheisen ausgebildet sind, weisen je eine rechteckige Fensteraussparung 20 auf und diese ist an der Außenseite des Ansatzes von einem mit dem Ansatz fest verbundenen Rahmen 21 umrandet. In der länglichen Fensteraussparung 20 können die Verlängerungszapfen 17 zwischen einer oberen und einer unteren Endstellung verschoben werden.

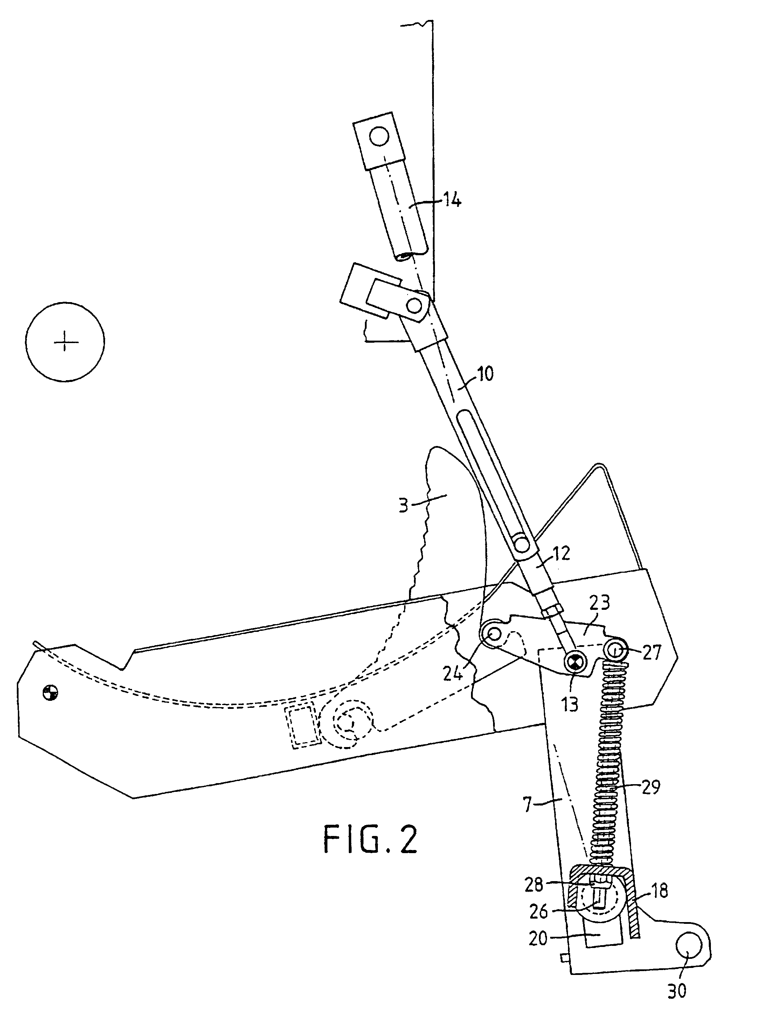

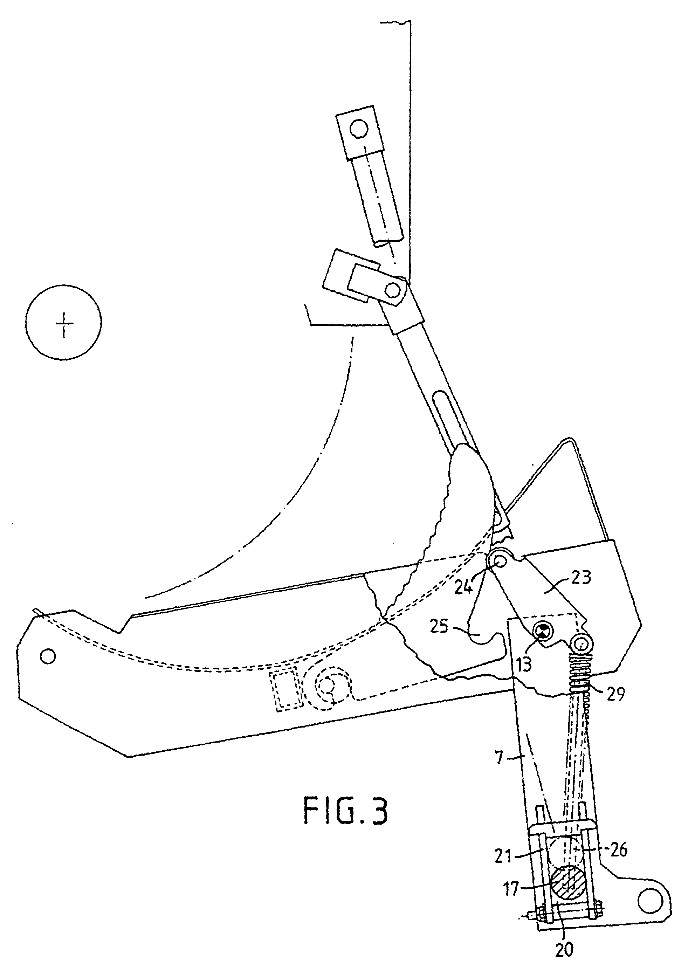

Die Messer 3 sind bezüglich ihrer zugehörigen Verriegelungs- und Drehzapfen 22 schwenkbar. Sie werden durch zweiarmige Messerhebel 23 in ihrer Grundstellung bezüglich des Rahmens gehalten, die bei hochgeschwenktem Schneidwerk der Betriebsstellung entspricht (Fig. 1 und 2). Die Messerhebel 23 schwenken um die an den Seitenwänden befestigten Drehzapfen 13. Sie haben an einem Hebelarm eine Rolle 24, welche sich in eine entsprechende Ausbuchtung 25 (Fig. 3) des Messers legt. Am anderen Hebelarm ist jeweils eine Stange 26 mittels eines Gelenks 27 angelenkt, welche die Quertraverse 18 durchsetzt (Fig. 2) und am Ende eine selbstsperrende Mutter 28 (Fig. 5) trägt, die als Anschlag wirkt. Die Stange ist von einer Druckfeder 29 umgeben, die sich einerseits an der Quertraverse 18 und andererseits an dem Gelenk 27 abstützt.

Die beschriebene Anordnung wirkt wie folgt: In der Betriebsstellung nach Fig. 1 kann nicht nur das Schneidwerk als Ganzes zusätzlich durch Bolzen gesichert sein, welche beispielsweise in die Bolzenlöcher 30 der Ansätze 7 eingesteckt werden, sondern auch die Verlängerungszapfen 17 sind in ihrer oberen Stellung durch Sicherungsstifte 31 gesichert, die quer durch die Rahmen 21 gesteckt sind (Fig. 4 und 5). Da somit die Quertraverse 18 nicht nachgeben kann, drücken die Druckfedern 29 auf die Messerhebel 23 und halten die Messer in ihrer Schneidstellung. Bei überlast durch Fremdkörper oder dergleichen können die Messer nach rechts schwenkend nachgeben. Dabei wird der Federdruck überwunden und die Rollen 24 laufen am Messerrücken hoch. Diese Überlastsicherung bringt das Messer anschließend wieder in seine ursprüngliche Stellung.

Zur Revision des Schneidwerks wird dieses ausgeschwenkt. Dazu werden gegebenenfalls die Bolzen aus den Löchern 30 entfernt, die Sicherungsstifte 31 gezogen und die Hubzylinder 14 ausgefahren. Das Schneidwerk gelangt so in die Stellung nach Fig. 2, in welcher die Gelenklaschen 10, 12 sich in ihrer gestreckten Anschlagstellung befinden. Die Hubzylinder 14 bewegen sich aber weiter und drücken die Quertraverse 18 in ihre untere Stellung. Sie zieht dabei mittels der Stangen 26 an den Messerhebeln 23 und schwenkt diese nach rechts in die Stellung nach Fig. 3. Damit sind die Messer 3 vom Druck der Rollen 24 entlastet und können ausgebaut werden. Dies wird anschließend noch näher beschrieben.

Ist die Revision beendet, werden die Hubzylinder 14 wieder eingefahren. Dabei bewegt sich im ersten Abschnitt des Hubweges die Quertraverse wieder in die obere Stellung und die Messerhebel kehren in ihre Betriebsgrundstellung zurück. Sodann wird das ganze Schneidwerk wieder in die Stellung nach Fig. l ' zurückgeführt und dort verriegelt.

Es wurde schon erwähnt, daß als Alternative das Schneidwerk unter der Wirkung seiner Schwerkraft abgesenkt werden kann, wodurch einfachwirkende Hubzylinder verwendet werden können, deren Kraft zum Hochschwenken eingesetzt wird. In diesem Fall können insbesondere an den Enden der Quertraverse starke Druckfedern vorgesehen sein, welche die Quertraverse 18 in ihre untere Stellung drängen. In diesem Fall werden beim Herunterschwenken des Schneidwerks die Messerhebel 23 sofort ausgeschwenkt. Das Einschwenken erfolgt erst wieder, wenn das Schneidwerk seine obere Endstellung erreicht hat und die Hubzylinder im letzten Abschnitt ihres Weges die Quertraverse 18 nach oben ziehen und dabei die starken Druckfedern spannen.

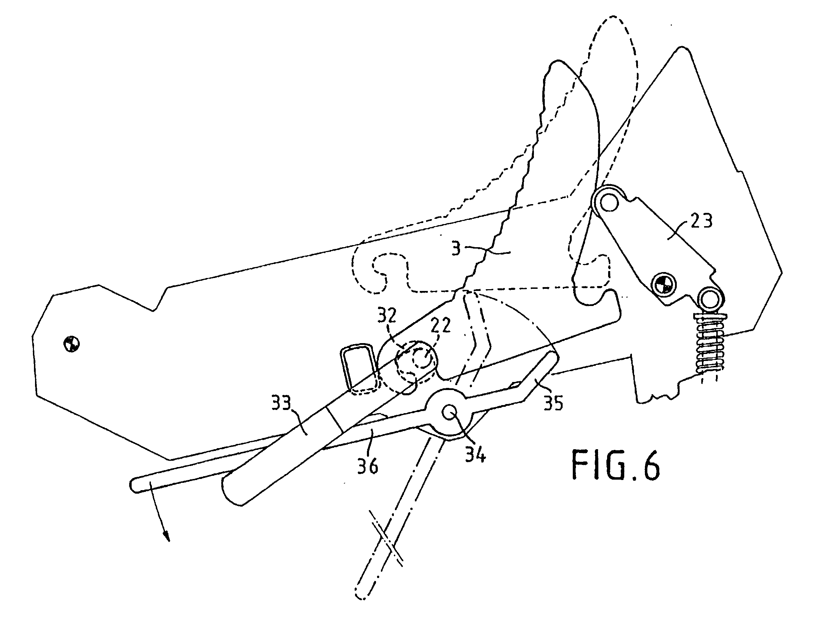

Fig. 6 zeigt noch einmal in vereinfachter Darstellung eine Seitenwand des Schneidwerkrahmens und den Messerhebel 23 in ausgeschwenkter Stellung. Das Messer 3 (in der voll ausgezogenen Darstellung) ist hier bereits entriegelt infolge Verdrehens der Exzenterwelle 32 um 180°. Zu diesem Zweck ist an der Exzenterwelle ein in den übrigen Darstellungen nicht wiedergegebener Griffhebel 33 angeordnet. Der Verriegelungs- und Drehzapfen 22 ist bereits in den nach außen geöffneten Teil des abgewinkelten Messerschlitzes eingetreten, so daß das Messer 3 jetzt nach oben herausgenommen werden kann.

Da dies gelegentlich zu Schwierigkeiten führt, wenn die Messer verschmutzt und in den Förderbodenschlitzen verklebt sind, ist zur weiteren Erleichterung des Messerausbaus eine Aushebe-Anordnung vorgesehen, die um Zapfen 34 drehbar an den Seitenwänden gelagert ist, die zu diesem Zweck etwas nach unten ausgedehnt sind.

Die Aushebe-Anordnung besteht aus einem querschnittlich V-förmigen Profileisen 35, das sich parallel zur Exzenterwelle 32 erstreckt und sich mit einer Kante an den Unterkanten der Messer 3 quer anlegt. Mittels eines Griffhebels 36 läßt sich dieses Profileisen 35 in die strichpunktierte Stellung schwenken. Dadurch werden die Messer 3 ein Stück weit nach oben in die gestrichelte Stellung verschoben, so daß sie dann leicht weggenommen werden können.

### Bezugszeichenliste:

- 1: Rotorwelle
- 2: Förderkanalboden
- 3: Messer
- 4: Drehzapfen
- 5: Seitenwand
- 6: Seitenwand
- 7: Ansatz
- 8: Gehäuse
- 9: Auge
- 10: Gelenklasche
- 11: Schlitz
- 12: Gelenklasche
- 13: Drehzapfen
- 14: Hubzylinder
- 15: Zapfen
- 16: Auge
- 17: Verlängerungszapfen
- 17a: Abschnitt des VZ
- 18: Quertraverse
- 19: Splint
- 20: Fensteraussparung
- 21: Rahmen
- 22: Verriegelungs- und Drehzapfen
- 23: Messerhebel
- 24: Rolle
- 25: Ausbuchtung
- 26: Stange
- 27: Gelenk
- 28: Mutter
- 29: Druckfeder
- 30: Bolzenloch
- 31: Sicherungsstift
- 32: Exzenterwelle
- 33: Griffhebel
- 34: Zapfen
- 35: Profileisen
- 36: Griffhebel

## Patentansprüche

1. Schneidwerk für landwirtschaftliche Maschinen, das an einem Förderkanal für Halmgut vorgesehen ist und das eine Vielzahl von in einer Reihe angeordneten, in ihrer Schneidstellung in den Förderkanal ragenden, schwenkbar gelagerten Messern enthält, die mittels federbelasteter Messerhebel in ihrer Schneidstellung gehalten werden und bei Fremdkörpereinwirkung entgegen der Federbelastung aus dem Förderkanal herausschwenken können, wobei die Messerhebel mittels je einer gelenkig angeschlossenen Stange unter Zwischenschaltung je eines Federelements mit einer gemeinsamen Quertraverse verschiebbar verbunden sind und Anschläge an den Stangen eine Mitnahme derselben durch die Quertraverse bewirken, **dadurch gekennzeichnet, daß** das Schneidwerk in einem bis zu einem festen Anschlag (10,12) nach unten schwenkbaren Rahmen angeordnet ist, zu dessen Betätigung Hubzylinder (14) vorgesehen sind, daß die Quertraverse (18) an beiden Enden in Schlitzführungen (20, 21) der Seitenwände (5, 6) des Rahmens verschiebbar aufgenommen ist und daß die Hubzylinder (14) an der Quertraverse (18) angreifen.

2. Schneidwerk nach Anspruch 1, **dadurch gekennzeichnet, daß** doppelt wirkende Hubzylinder vorgesehen sind, die - ausgehend von der Betriebsstellung - den Rahmen bis zum Anschlag (10, 12) nach unten schwenken und mit dem restlichen Hub die Quertraverse in den Schlitzführungen (20, 21) bewegen und dadurch über die Stangen (26) die Messerhebel (23) ausschwenken und bei der Gegenbewegung mittels der Quertraverse (18) und der Federelemente (29) die Messerhebel (23) einschwenken und anschließend den Rahmen hochschwenken.

3. Schneidwerk nach Anspruch 1, **dadurch gekennzeichnet, daß** auf die Quertraverse (18) wirkende starke Federelemente vorgesehen sind, welche unter Mitnahme der auf die Messerhebel (23) wirkenden Stangen (26) die Quertraverse (28) in den Schlitzführungen in ihre Endstellung bringen und daß die Hubzylinder (14) einfachwirkend sind und beim Hochschwenken des Rahmens die starken Federelemente spannen.

4. Schneidwerk nach Anspruch 3, **dadurch gekennzeichnet, daß** anstelle der starken Federelemente eigene Hubzylinder zum Ausschwenken der Messerhebel vorgesehen sind.

5. Schneidwerk nach Anspruch 1, **dadurch gekennzeichnet, daß** je zwei gelenkig oder durch eine Schlitzführung (11) und ein Gelenk miteinander verbundene Laschen (10, 12) in ihrer gestreckten Stellung als Anschlag für den nach unten geschwenkten Rahmen vorgesehen sind.

6. Schneidwerk nach Anspruch 1, **dadurch gekennzeichnet, daß** der Rahmen den von den Messern (3) durchsetzten Teil des Förderkanalbodens (2) bildet.

7. Schneidwerk nach Anspruch 1, **dadurch gekennzeichnet, daß** die Messer (3) mittels auf einer verdrehbaren Exzenterwelle (32) angeordneter Verriegelungs- und Drehzapfen (22) in der höhenverschwenkbaren Einbaustellung verriegelt gehalten und durch eine Exzenterwellenverdrehung zum Ausbau entriegelbar sind und daß ein sich parallel zur Exzenterwelle (32) erstreckendes schwenkbares gemeinsames Aushebeorgan (35, 36) die entriegelten Messer (3) durch Anlage an deren Unterkante auszuheben gestattet.

## Claims

1. A cutting mechanism for agricultural machines, which is provided at a conveyor passage for stalk material and which includes a plurality of pivotably mounted blades which are arranged in a row and which in their cutting position project into the conveyor passage and which are held in their cutting position by means of spring-loaded blade levers and which can pivot out of the conveyor passage against the spring loading when subjected to the action of a foreign body, wherein the blade levers are displaceably connected to a common transverse member by means of a respective pivotably connected rod with the interposition of a respective spring element and abutments on the rods cause entrainment thereof by the transverse member, **characterised in that** the cutting mechanism is arranged in a frame which is pivotable downwardly as far as a fixed abutment (10, 12) and for the actuation of which there are provided stroke cylinders (14), that the transverse member (18) is displaceably accommodated at both ends in slot guides (20, 21) in the side walls (5, 6) of the frame and that the stroke cylinders (14) engage the transverse member (18).

2. A cutting mechanism according to claim 1 **characterised in that** there are provided double-acting stroke cylinders which - from the operative position - pivot the frame downwardly as far as the abutment (10, 12) and with the remaining stroke movement move the transverse member in the slot guides (20, 21) and thereby pivot the blade levers (23) out by way of the rods (26) and in the opposite movement by means of the transverse member (18) and the spring elements (29) pivot the blade levers (23) in and then pivot the frame upwardly.

3. A cutting mechanism according to claim 1 **characterised in that** there are provided strong spring elements which act on the transverse member (18) and which, with entrainment of the rods (26) acting on the blade levers (23), move the transverse member (28) in the slot guides into the end position thereof and that the stroke cylinders (14) are single-acting and stress the strong spring elements when the frame is pivoted upwardly,

4. A cutting mechanism according to claim 3 **characterised in that** instead of the strong spring elements there are provided specific stroke cylinders for pivoting the blade levers out.

5. A cutting mechanism according to claim 1 **characterised in that** two bars (10, 12) which are connected together pivotably or by a slot guide (11) and a pivot are respectively provided in their straight position as an abutment for the downwardly pivoted frame.

6. A cutting mechanism according to claim 1 **characterised in that** the frame forms the part of the conveyor passage bottom (2), through which the blades (3) pass.

7. A cutting mechanism according to claim 1 **characterised in that** the blades (3) are held locked in the upwardly pivotable installation position by means of locking and rotating projections (22) arranged on a rotatable eccentric shaft (32) and can be unlocked by rotation of the eccentric shaft for removal and that a pivotable common lift-out member (35, 36) which extends parallel to the eccentric shaft (32) permits the unlocked blades (33) to be lifted out by bearing against the lower edge thereof.

## Revendications

1. Mécanisme de coupe pour machines agricoles, prévu au niveau d'un canal de transport de produit à tige et comprenant une pluralité de couteaux qui sont disposés en une rangée, font saillie dans le canal de transport dans la position de coupe, sont montés oscillants, sont maintenus dans la position de coupe par des leviers de couteaux sollicités par ressort et peuvent basculer hors du canal de transport à l'encontre de la force des ressorts lors d'une action d'un corps étranger, les leviers de couteaux étant reliés de manière coulissante à une barre transversale commune au moyen chaque fois d'une biellette articulée avec interposition d'un élément élastique, et des butées prévues sur les biellettes provoquant l'entraînement de celles-ci par la barre transversale commune, **caractérisé en ce que** le mécanisme de coupe est disposé dans un cadre qui peut pivoter vers le bas jusqu'à une butée (10, 12) fixe et pour la commande duquel il est prévu des vérins (14), **en ce que** la barre transversale (18), à ses deux extrémités, est montée coulissante dans des ouvertures en forme de fentes (20, 21) dans les parois latérales (5, 6) du cadre et **en ce que** les vérins (14) agissent sur la barre transversale (18).

2. Mécanisme de coupe selon la revendication 1, **caractérisé en ce qu'**il est prévu des vérins à double effet qui - depuis la position de fonctionnement - font pivoter le cadre vers le bas jusqu'à la butée (10, 12) et avec le reste de la course déplacent la barre transversale dans les ouvertures en forme de fentes (20, 21), faisant ainsi sortir les leviers de couteaux (23) avec l'aide des biellettes (26), et qui dans le mouvement inverse font rentrer les leviers de couteaux (23) par l'intermédiaire de la barre transversale (18) et des éléments élastiques (29), puis relèvent le cadre.

3. Mécanisme de coupe selon la revendication 1, **caractérisé en ce qu'**il est prévu sur la barre transversale (18) des éléments élastiques actifs puissants qui en entraînant les biellettes (26) agissant sur les leviers de couteaux (23) amènent la barre transversale (28) dans sa position extrême et **en ce que** les vérins (14) sont à simple effet et tendent les éléments élastiques puissants lors du relevage du cadre.

4. Mécanisme de coupe selon la revendication 3, **caractérisé en ce qu'**il est prévu à la place des éléments élastiques puissants des vérins individuels pour faire pivoter les leviers de couteaux.

5. Mécanisme de coupe selon la revendication 1, **caractérisé en ce qu'**il est prévu deux pattes (10, 12) qui sont liées l'une à l'autre de manière articulée ou par une lumière de guidage (11) et une articulation, qui, dans leur position déployée agissent comme butée pour le cadre pivoté vers le bas.

6. Mécanisme de coupe selon la revendication 1, **caractérisé en ce que** le cadre constitue le fond (2) du canal de transport traversé par les couteaux (3).

7. Mécanisme de coupe selon la revendication 1, **caractérisé en ce que** les couteaux (3) sont maintenus verrouillés dans la position de montage basculée vers le haut, au moyen d'un téton de verrouillage (22) tournant prévu sur un arbre à excentrique (32) tournant et peuvent être déverrouillés par rotation de l'arbre à excentrique pour le démontage, et **en ce qu'**un organe de levage (35, 36) pivotant commun, qui s'étend parallèlement à l'arbre à excentrique (32), permet de soulever les couteaux (3) en venant en appui sur leur bord inférieur.
